# EUROPEAN PATENT APPLICATION

(11) **EP 0 647 547 A2**
(43) Date of publication of application: **12.04.1995**
(21) Application number: 94202900.0
(22) Date of filing: 06.10.1994
(51) Int. Cl.: B60R 21/02, B60R 1/08

(54) **A guard for use in a vehicle**

(30) Priority: 06.10.1993 GB 9320558
(71) Applicant: ATHAG LIMITED, Atherstone, Warwickshire CV9 1LQ (GB)
(72) Inventor: Sharpe, Nicholas Simon, CV10QUE Warwickshire (GB)
(74) Representative: Dempster, Benjamin John Naftel

(57) **Abstract**

A guard (10) for use in a production vehicle such as an estate car comprises a barrier (12) and two mounting members (14). Each mounting member (14) is mounted on a rear seat belt mounting and is secured by a screw which replaces an existing trim member screw. The mounting members (14) mount the barrier (12) between them pivotally such that the barrier (12) is movable between a storage position alongside the ceiling (26) of the car and a use position in which it extends between the ceiling (26) of the car and the top of the rear seats (28)

According to another aspect of the invention there is provided a guard (10) for use in a vehicle, the guard comprising a barrier (12) in the form of a perforated web, a portion of the web being interrupted by a transparent magnifying element (60). The transparant magnifying element will enable the driver of the vehicle to have a complete uninterrupted field of view through the magnifying element in spite of the presence of the barrier.

## Description

The invention relates to a guard for use in a vehicle.

An example of a guard for use in a vehicle is a dog guard for use in a car. In many known dog guards for use in cars, the guard is fixed in place by fixings such as friction pads which are movable outwardly from the guard to frictionally engage the interior of the car. This may, however, lead to confusion on the part of the user as to precisely where on their particular car the guard should be located and where the fixing should engage for the guard to be safely held in position. Also, it may be desired to store the guard in the vehicle when it is not in use and the shape and size of the guard may make that difficult.

According to one aspect of the invention there is provided a guard for use in a production vehicle, the guard comprising a barrier and mounting means, the mounting means being arranged to mount the barrier on at least one existing element of a vehicle such that the barrier is movable between a storage position alongside an interior surface of the vehicle and a use position.

In this way, the barrier is mounted on at least one existing element of the vehicle so there is no confusion over where or how the guard should be mounted. Indeed, as the barrier is movable to a storage position the barrier may be permanently mounted in the vehicle and indeed may be supplied prefitted as a standard equipment option when the vehicle is sold. As the barrier is stored alongside an interior surface of the vehicle it is conveniently out of the way.

According to another aspect of the invention there is provided a guard for use in a production vehicle, the guard comprising a barrier and mounting means, the mounting means being arranged to mount the barrier on at least one existing element of a vehicle such that the barrier is movable between a storage position in which it is substantially parallel to the axis of the vehicle, and a use position.

By arranging the barrier in this way in the storage position, it will be edge-on to a driver looking through the vehicle and therefore will not obstruct his vision to any significant extent.

In the storage position the barrier preferably lies alongside an interior surface of the vehicle.

The barrier may conveniently be substantially horizontal in the storage position.

The said interior surface of the vehicle is preferably the ceiling of the vehicle. The space adjacent the ceiling of the vehicle is unlikely to be used for other purposes and the presence of the barrier in that position in most vehicles will not encroach upon the field of view of the driver.

The mounting means is preferably arranged to mount the dog guard on at least one seat belt mounting of a vehicle. The seat belt mounting is a universal fixture with good inherent strength. The mounting means may include a mounting member which engages the seat belt mounting. The mounting member may include an open ended slot to receive a part of the seat belt mounting therein.

The mounting means may be arranged to mount the barrier on at least one existing trim fixing of a vehicle. The mounting means may include a mounting member having an aperture to receive a screw to retain the trim and fix the mounting member.

The barrier may be movable between the storage position and use position in any convenient way but preferably the barrier is arranged to pivot between the storage position and the use position. Preferably, retaining means is provided to retain the barrier in the use position. Retaining means may also or alternatively be provided to retain the barrier in the storage position. The retaining means may take any suitable form and may comprise a pin which is received in an aperture in a member connected to the barrier and which is also received in an aperture in a member which is connected to the mounting means.

According to a further aspect of the invention there is provided a production vehicle including a guard according to either previous aspect of the invention mounted therein.

The vehicle is preferably of the kind in which the storage area includes a ceiling such as a truck or van and preferably the vehicle is an estate car. Preferably, the barrier lies adjacent the ceiling of the vehicle storage area such as the estate car boot ceiling.

Where a mounting member is provided, preferably the mounting member is contoured to follow a pillar of the vehicle which may be the C-pillar.

A dog guard for use in a car is often made from mesh or bar which lies in the driver's field of rear view through the vehicle and may have a limited effect on how well he can see to the rear.

According to another aspect of the invention there is provided a guard for use in a vehicle, the guard comprising a barrier in the form of a perforated web, a portion of the web being interrupted by a transparent magnifying element.

The transparent magnifying element will enable the driver of the vehicle to have a complete uninterrupted field of view through the magnifying element in spite of the presence of the barrier.

An embodiment of the invention will now be described by way of example and with reference to the accompanying drawings, in which:
Fig. 1 is a side elevation of a dog guard of the invention fitted in an estate car;
Fig. 2 is an elevation of a mounting member of the guard of Fig. 1;
Fig. 3 is a detail elevation of one retaining means of the guard of Fig. 1;
Fig. 4 is a detail end elevation of the other retaining means of the guard of Fig. 1; and
Fig. 5 is a detail side elevation of the other retaining means of the guard of Fig. 1.

The guard 10 comprises a barrier 12 mounted at each end by a mounting member 14.

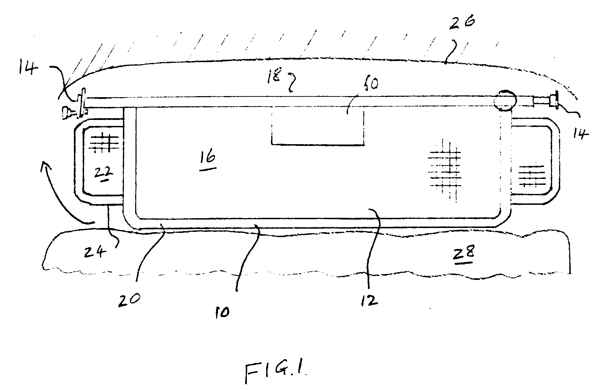

The barrier 12 comprises a main mesh panel 16 which is bounded by a straight tube 18 across the top and a U-shaped steel tube 20 around the other three sides of the panel 16. At each side of the main panel 16 there is a smaller mesh panel 22 bounded on one side by part of an upright arm of the U-shaped tube 20 and on the other three sides by a C-shaped peripheral tube 24. As shown in Fig. 1, the barrier in the use position covers the area between the ceiling 26 of the estate car and the top of the rear seats 28. The car in this case is a Ford Mondeo Estate.

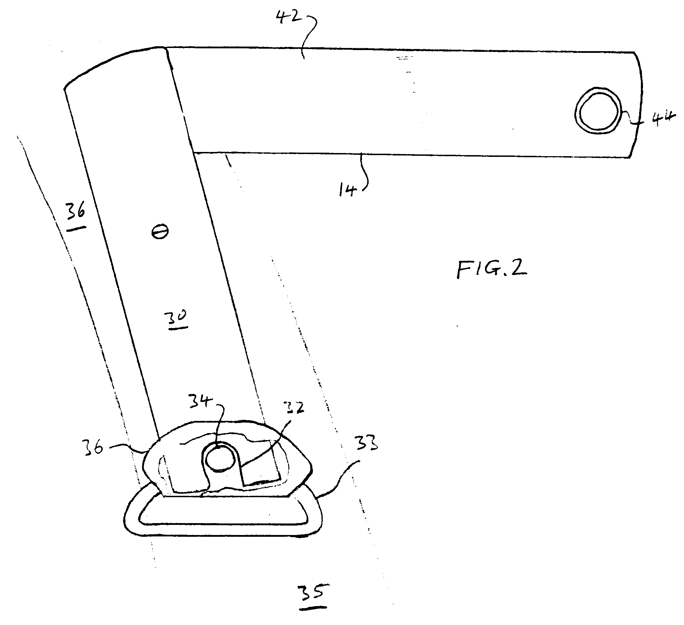

Each end of the straight tube 18 is mounted by a mounting member 14. A shown in Fig. 2, each mounting member 14 is L-shaped. One arm 30 of each mounting member extends downwardly and includes an open ended slot 32 in its end. The slot 32 receives the main pivot mounting pin 34 of the rear seat belt mounting 33 and the end of the arm 30 is thus hidden behind the casing 36 of the seat belt mounting 33. The arm 30 extends upwardly from the pivot mounting pin 34 following the C-pillar 35 of the car on which the pivot mounting pin 34 is mounted. The C-pillar 35 is covered by a moulded plastic trim member 36 which is secured by a screw above the pivot mounting pin 34. In order to fix the mounting member 14, the trim screw is removed and replaced by a screw 38 with a longer shank which passes through the arm 30 and the trim component 36.

The second arm 42 of the mounting member 14 is welded to the first arm 30. The arm 42 includes a twist partway along its length so that the end of the arm is vertical.

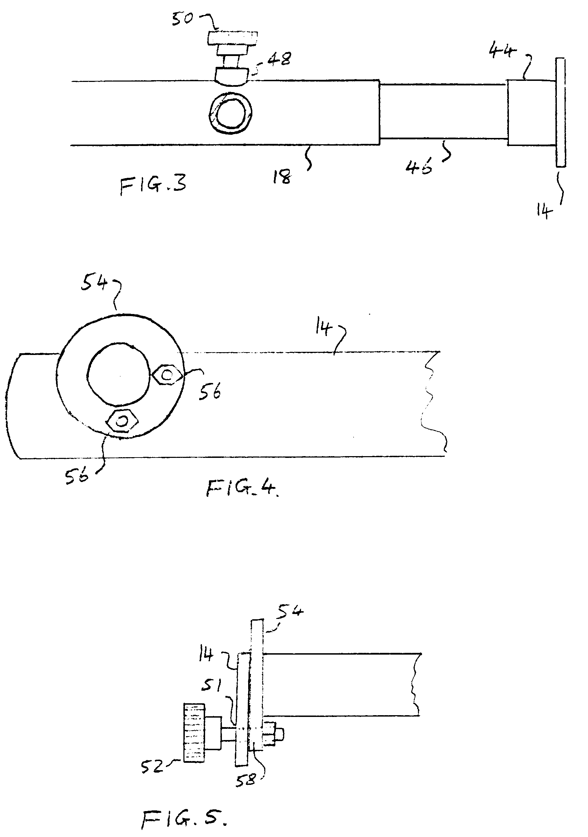

On one of the mounting members 14, as shown in Figs. 2 and 3, the inner side of the arm 42 mounts a short tubular cylindrical boss 44 welded to the arm 42. A round bar 46 is fixedly mounted in the boss 44 and is received in the end of the tube 18 to pivotally mount the tube 18 and thereby the barrier 12. Where the U-shaped tube 20 connects to the straight tube 18 there is a tapped projection 48 on the tube 18 which receives a screw 50 with a large head for manual operation so that the screw 50 can be screwed into abut the round bar 46.

The other mounting member 14 has a small aperture 51 adjacent the end of its lower edge to receive a further screw 52 with a large head for manual operation. Above the aperture 51 is provided a round bar which projects into the end of the straight tube 18. The straight tube 18 terminates in an annular flange 54 to which are welded two nuts 56 at 90° about the flange 54 and including tapped bores 58 behind each nut 56 to receive the further screw 52.

In use, the barrier 12 can be swung on the round bars 46 and can be fixed in any position using the first screw 50 which can be screwed in to abut and lock on the round bar 46. The further screw 52 is used to lock the barrier 12 in particular use and storage positions. Thus, when the barrier 12 is substantially vertical and adjacent the top of the rear seats 28 the further screw 52 will pass through the aperture in the arm 42 of the mounting member 14 and through the aperture in the flange 54 and one of the nuts 56 to retain the barrier 12 in the use position. When it is desired to move the barrier 12 into the storage position, the two screws 50,52 are undone and the barrier 12 is pivoted to lie adjacent the ceiling 26 over the boot space of the car. The screws 50,52 can then be tightened to retain the barrier 12 in the storage position. In this position the barrier 12 does not obscure the view through the rear window of the car. The barrier 12 is dished in shape to fit to the contour of the ceiling of the car. The mesh 16 of the barrier 12 is interrupted by a magnifying sheet section 60 which is slightly larger than the size of a car rear view mirror. The magnifying sheet section 60 is provided centrally at the top of the main mesh panel 16.

When the barrier 12 is in the use position the driver looking in the rear view mirror can either look through the mesh 16, or can choose to concentrate upon the magnifying sheet which will give an uninterrupted view with the same scope to the rear of the car.

The wire mesh of the barrier may be coated in a plastic material.

Although the barrier of the guard specifically described reaches only to the top of the rear seat back 28, it may extend to the boot floor and in that case there might be a hinged line at substantially the level of the top of the rear seat back to enable the barrier to be folded onto itself and rotated into the storage position. One or more dividers could also be provided for use with the barrier to partition the boot so that more than one dog could be carried separately for example.

## Claims

1. A guard for use in a production vehicle, the guard comprising a barrier and mounting means, the mounting means being arranged to mount the barrier on at least one existing element of a vehicle such that the barrier is movable between a storage position alongside an interior surface of the vehicle and a use position.

2. A guard as claimed in claim 1, wherein the barrier is substantially horizontal in the storage position.

3. A guard as claimed in claim 2, wherein the said interior surface of the vehicle is the ceiling of the vehicle.

4. A guard as claimed in claim 1, 2 or 3, wherein the mounting means is arranged to mount the dog guard on at least one seat belt mounting of a vehicle.

5. A guard as claimed in claim 4, wherein the mounting means includes a mounting member which engages the seat belt mounting.

6. A guard as claimed in claim 5, wherein the mounting member includes an open ended slot to receive a part of the seat belt mounting therein.

7. A guard as claimed in any preceding claim, wherein the mounting means is arranged to mount the barrier on at least one existing trim fixing of a vehicle.

8. A guard as claimed in claim 7, wherein the mounting means includes a mounting member having an aperture to receive a screw to retain the trim and fix the mounting member.

9. A guard as claimed in any preceding claim, wherein the barrier is arranged to pivot between the storage position and the use position.

10. A guard as claimed in any preceding claim, wherein retaining means is provided to retain the barrier in the use position.

11. A guard as claimed in any preceding claim, wherein retaining means is provided to retain the barrier in the storage position.

12. A guard as claimed in claim 10 or claim 11, wherein the retaining means comprises a pin which is received in an aperture in a member connected to the barrier and which is also received in an aperture in a member which is connected to the mounting means.

13. A production vehicle including a guard as claimed in any preceding claim.

14. A vehicle as claimed in claim 13, wherein the vehicle is of the kind in which the storage area includes a ceiling.

15. A vehicle as claimed in claim 14, wherein the vehicle is an estate car.

16. A vehicle as claimed in claim 14 or claim 15, wherein the barrier lies adjacent the ceiling of the vehicle storage area in the storage position.

17. A vehicle as claimed in any of claims 1 to 16, wherein where a mounting member is provided, the mounting member is contoured to follow a pillar of the vehicle.

18. A vehicle as claimed in claim 17, wherein the mounting member is contoured to follow the C-pillar of the vehicle.

19. A guard for use in a vehicle, the guard comprising a barrier in the form of a perforated web, a portion of the web being interrupted by a transparent magnifying element.
